# EUROPÄISCHE PATENTSCHRIFT

(11) **EP 1 827 955 B1**
(45) Veröffentlichungstag und Bekanntmachung des Hinweises auf die Patenterteilung: **18.07.2012**
(21) Anmeldenummer: 04803439.1
(22) Anmeldetag: 02.12.2004
(51) Int. Cl.: B62J 15/00, B60K 11/08

(54) **SPRITZWASSERSAMMELEINRICHTUNG FÜR FAHRZEUGE, INSBESONDERE FÜR MOTORRÄDER**
SPLASH WATER COLLECTING DEVICE FOR VEHICLES, MORE PARTICULARLY MOTORCYCLES
COLLECTEUR D'EAU PROJETEE POUR DES VEHICULES, NOTAMMENT POUR DES MOTOS

(30) Priorität: 27.01.2004 DE 102004004052
(43) Veröffentlichungstag der Anmeldung: 05.09.2007
(73) Patentinhaber: Bayerische Motoren Werke Aktiengesellschaft, 80809 München (DE)
(72) Erfinder: HACK, Georg, 84028 Landshut (DE)
(86) Internationale Anmeldenummer: PCT/EP2004/013692
(87) Internationale Veröffentlichungsnummer: WO 2005/070749

(56) Entgegenhaltungen:
- WO-A-01/08962
- DE-B- 1 039 385
- GB-A- 2 198 696
- GB-A- 2 327 654
- GB-A- 2 377 209
- JP-A- 59 109 475
- US-A- 4 921 276
- US-A- 5 277 444

## Beschreibung

Die vorliegende Erfindung betrifft ein Motorrad mit einer Spritzwassersammeleinrichtung gemäß dem Oberbegriff des Patentanspruches 1.

Ein derartiges Motorrad ist aus der US 5 566 746 bekannt. Zum technischen Hintergrund der Erfindung zählen die GB 219,869,6 A, JP 59,109,475 A, US 5,277,444 sowie die GB 2 265 875 A.

Motorräder weisen an ihrem Vorderrad üblicherweise ein "Schutzblech" auf, das auch als "Kotflügel" bezeichnet wird. Das Schutzblech bzw. der Kotflügel sollen auf regennasser Fahrbahn Wasser, das bei der Drehung des Vorderrades bzw. des Reifens vom Reifen nach oben gefördert wird, auffangen, ableiten und somit vom Fahrer abhalten. Im Unterschied zu älteren Motorrädern, bei denen die Schutzbleche den Vorderreifen bis relativ weit nach unten und bis relativ weit nach vorne abdeckten, weisen moderne Motorräder üblicherweise nur noch kleine und relativ schmale Kotflügel auf, die lediglich den oberen, hinteren Bereich des Vorderrads abdecken. In den hinteren Bereichen des Vorderreifens, die nicht durch den Kotflügel abgedeckt sind, löst sich das vom Reifen geförderte Spritzwasser und spritzt tangential vom Reifen ab. Insbesondere breite Vorderreifen weisen eine relativ große Aufstandsfläche auf und fördern relativ viel Schmutzwasser nach oben. Der "Schiebedruck" des geförderten Wassers "schiebt" das Wasser in der Reifenmitte nach oben bis die Wasserschicht ausreichend dick ist und seitlich austritt oder "bündelweise" nach unten abfällt und durch den Fahrtwind nach hinten geschleudert wird. Um das Schmutzwasser aufzufangen, wäre ein breiter Kotflügel erforderlich, was aus Designgründen jedoch unerwünscht ist. Die schmalen und relativ kurzen Kotflügel vieler moderner Motorräder sind im Grunde nur für Schönwetterbetrieb geeignet, da sie aufgenommenes Spritzwasser nicht ordnungsgemäß entsorgen.

Ein Teil des vom Kotflügel aufgenommenen Spritzwassers wird durch die "Schiebekraft" des nachfolgenden Spritzwassers bis zum vorderen Ende des Kotflügels geschoben, wo es entgegen dem Fahrtwind austritt. Das nach vorne austretende Schmutzwasser wird dann durch den Fahrtwind nach hinten geschleudert. Ist hinter dem Kotflügel ein Kühler angeordnet, so wird ein Großteil des vom Vorderreifen geförderten Schmutzwassers entweder direkt vom Vorderreifen zum Kühler gespritzt oder über den Kotflügel nach vorne geleitet und anschließend vom Fahrtwind nach hinten auf den Kühler geschleudert. Dies führt zu einer starken Verschmutzung. Ferner besteht die Gefahr, dass die Kühlerrippen mit Schmutz, der im Schmutzwasser enthalten ist, verschlossen werden, was zu einer Verringerung der Kühlleistung und im Extremfall zu einer Überhitzung des Motors führt.

Aufgabe der Erfindung ist es, ein Motorrad mit einer Spritzwassersammeleinrichtung zu schaffen, die den Designanforderungen moderner Fahrzeuge gerecht wird und die dennoch eine gute Spritz- bzw. Schmutzwasserabfuhr ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem Motorrad mit einer Spritzwassersammeleinrichtung, die aus zwei Komponenten besteht, nämlich einem Kotflügel, der in einem radialen Abstand vom Reifen des Fahrzeugs angeordnet ist und der sich in Drehrichtung des Reifens über einen Umfangsabschnitt des Reifens erstreckt und ferner in einem Spritzwasserauffangelement. Das Spritzwasserauffangelement ist in einem Bereich angeordnet, der sich in Bezug auf eine Hauptfahrtrichtung des Fahrzeugs hinter dem Reifen und in Drehrichtung des Reifens zwischen einem Aufstandsbereich des Reifens auf der Fahrbahn und einem unteren Ende des Kotflügels befindet. Bei einem Motorrad ist das Spritzwasserauffangelement vorderhalb des Motors nahe am Vorderreifen angeordnet. Spritzwasser, das bei der Drehung des Reifens vom Reifen nach oben gefördert wird und sich dabei tangential vom Reifen ablöst wird durch das Spritzwasserauffangelement aufgefangen und nach unten zur Fahrbahn hin abgeleitet. Durch ein derartiges Spritzwasserauffangelement, das bei einem Motorrad vorderhalb des Motors angeordnet sein kann, wird ein Großteil des vom Vorderreifen nach oben geförderten und sich vom Vorderreifen tangential ablösenden Spritzwassers aufgefangen. Die Verschmutzung des Motorrads bzw. einzelner Motorradkomponenten wie z. B. eines Kühlers, der vor dem Motor angeordnet ist, oder des Motors selbst, kann dadurch erheblich verringert werden.

Das Spritzwasserauffangelement kann ein "kastenartiges" Bauteil sein. Unter dem Begriff "kastenartig" ist zu verstehen, dass das erfindungsgemäβe Spritzwasserauffangelement eine dem-Reifen zugewandte Vorderseite aufweist die zum Reifen hin offen ist, eine dem Reifen abgewandte Rückwand, und optional einen mit der Rückwand verbundenen oberen Wandbereich und Seitenwände, die mit der Rückwand und dem oberen Wandbereich verbunden sind. Der Teil des vom Reifen geförderten Spritzwassers, der vom Reifen tangential nach hinten geschleudert wird, gelangt über die "offene Vorderseite" in das Spritzwasserauffangelement und läuft an der "Innenseite" der Rückwand bzw. an den Seitenwänden nach unten. In einem unteren Bereich des Spritzwasserauffangelements ist eine Öffnung vorgesehen, über die das aufgenommene Spritz- bzw. Schmutzwasser zur Fahrbahn hin in einen strömungsberuhigten Bereich abgegeben wird.

Um das vom Reifen in das Spritzwasserauffangelement geschleuderte Wasser nicht an der Rückwand des Spritzwasserauffangelements zu zerstäuben, ist die Rückwand gekrümmt, so dass sich in der Mitte eine Wasserschicht bilden kann, die anfliegende Tropfen bindet. Die "Tiefe" des Spritzwasserauffangelements muss der Menge des anfallenden Schmutzwassers angepasst sein. Das Spritzwässerauffangelement sollte so "tief' sein, dass eine Überflutung vermieden wird. Die Innenflächen des Spritzwasserauffangelements sind vorzugsweise glatt und weisen keine Kanten auf, um Schmutzablagerungen im Inneren des Spritzwasserauffangelements zu vermeiden.

Nach einer Weiterbildung der Erfindung sind an der Vorderseite des Spritzwasserauffangelements Lamellen angeordnet, welche die Form von Turbinenschaufeln haben können. Vorzugsweise verlaufen die lamellenartigen Elemente quer und verbinden die beiden Seitenwände des Spritzwasserauffangelements miteinander. Die dem Reifen zugewandten "vorderen Enden" der lamellenartigen Elemente sind im Wesentlichen parallel zu den "Abspritztangenten" des Vorderreifens. Die vom Vorderreifen abspritzenden Wassertropfen berühren die vorderen Enden der Lamellen nicht oder nur unter einem recht spitzen Winkel. Wassertropfen, die sich tangential vom Vorderreifen ablösen, können also im Wesentlichen ungehindert in das Spritzwasserauffangelement eindringen.

Wie bereits erwähnt, können die lamellenartigen Elemente schaufelartig gekrümmt sein. Vorzugsweise sind die lamellenartigen Elemente so gekrümmt, dass das Schmutzwasser, das in das Spritzwasserauffangelement gelangt, durch die Lamellen vom Einlaufbereich, d. h. vom vorderen Ende der Lamellen zur Rückwand hin bzw. schräg nach unten zur Rückwand hin geleitet wird. Durch eine derartige Lamellenform wird ein Zurückspritzen des aufgefangenen Spritzwassers nach vorne entgegen dem Fahrtwind vermieden. Das Spritzwasser wird also primär an der Rückwand und an den Seitenwänden des Spritzwasserauffangelements nach unten in Richtung zur Fahrbahn geleitet.

Wie bereits erwähnt, kann das Spritzwasserauffangelement vorderhalb des Motors bzw. vorderhalb eines Kühlers angeordnet sein. Bei einer Anordnung des Spritzwasserauffangelements vorderhalb eines Kühlers ist nur eine sehr geringe Beeinträchtigung der Kühlleistung zu erwarten, da hinter dem Vorderrad ohnehin bereits eine Unterdruckzone vorhanden ist. Durch eine strömungstechnisch günstige Gestaltung des Spritzwasserauffangelements kann sogar eine Verkleinerung der Unterdruckzone und somit eine bessere Anströmung des Kühlers erreicht werden.

Es sei ausdrücklich darauf hingewiesen, dass die Erfindung nicht auf eine Anordnung des Spritzwasserauffangelements hinter dem Vorderrad eines Motorrads beschränkt ist. Ein derartiges Spritzwasserauffangelement kann beispielsweise auch im Bereich des Hinterrads eines Motorrads eingesetzt werden.

Im folgenden wir die Erfindung im Zusammenhang mit der Zeichnung näher erläutert. Es zeigen:
- Figur 1: den Vorderradbereich eines herkömmlichen Motorrads ohne Spritzwasserauffangelement;
- Figur 2: den Vorderradbereich eines Motorrads mit einem Spritzwasserauffangelement gemäß der Erfindung;
- Figur 3: eine perspektivische Darstellung des Vorderradbereichs eines Motorrads mit einem Spritzwasserauffangelement;
- Figur 4: die Strömungsverhältnisse an einem Kühler eines Motorrads ohne Spritzwasserauffangelement;
- Figur 5: die Strömungsverhältnisse an einem Kühler eines Motorrads mit einem Spritzwasserauffangelement.

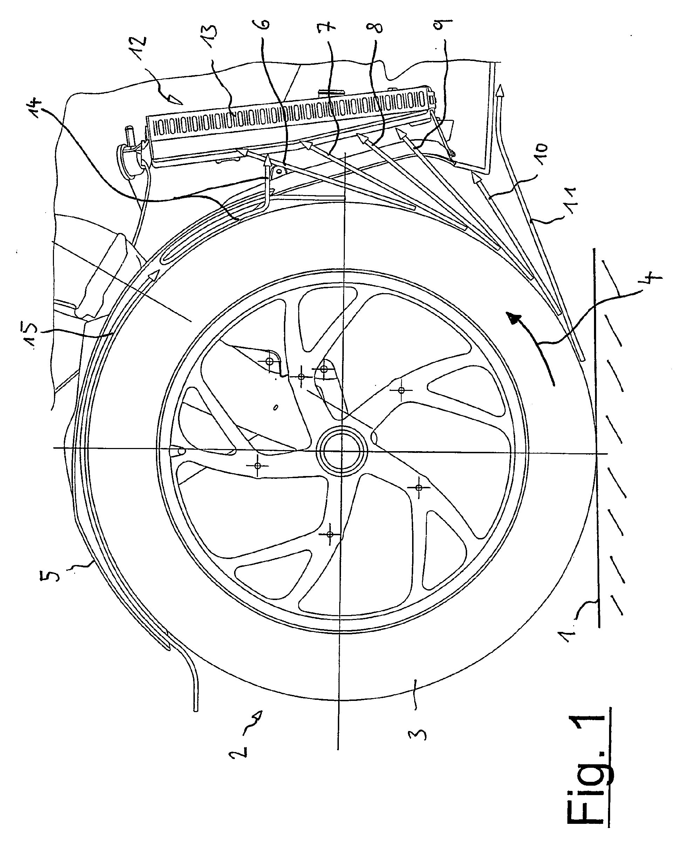

Figur 1 zeigt den Vorderradbereich eines herkömmlichen Motorrads. Beim Fahren auf regennasser Fahrbahn 1 fördert das Vorderrad 2, oder genauer gesagt der Vorderreifen 3, Schmutzwasser in Drehrichtung 4 nach oben.

Motorräder weisen an ihrem Vorderrad üblicherweise ein an der Vorderradgabel befestigtes Schutzblech auf, das auch als Kotflügel 5 bezeichnet wird. Bei dem hier gezeigten Ausführungsbeispiel erstreckt sich der Kotflügel 5 in Umfangsrichtung des Reifens 3 über einen Winkelbereich von etwa 120°.

Ein Teil des vom Reifen 3 geförderten Schmutzwassers spritzt tangential vom Reifen 3 ab, was durch "Abspritztangenten" 6-8 angedeutet ist. Ein Teil des vom Reifen 3 abspritzenden Schmutzwassers wird dabei unmittelbar gegen einen Kühler 12 geschleudert, der vorderhalb eines hier nicht näher dargestellten Motors angeordnet ist. Durch den Fahrtwind wird das Schmutzwasser durch Kühlrippen 13 des Kühlers gedrückt. Dabei besteht die Gefahr, dass Schmutzpartikel, die in dem Schmutzwasser enthalten sind, sich zwischen den einzelnen Kühlrippen 13 festsetzen und den Kühler 12 verstopfen.

Ferner gelangt ein Teil des vom Reifen 3 nach oben geförderten Schmutzwassers in den Bereich des Kotflügels 5. Wie durch einen Spritzwasserpfeil 14 angedeutet ist, strömt ein Teil des geförderten Schmutzwassers an der "Innenseite" des Kotflügels 5 nach oben. Zwischen dem Kotflügel 5 und dem Reifen 3 bildet sich also ein "Schmutzwasserkeil" aus. Ein Teil des geförderten Schmutzwassers tropft vom Kotflügel 5 ab, fließt schräg nach unten zurück und wird, wie durch den Pfeil 14 angedeutet ist, durch den Fahrtwind nach hinten in Richtung des Kühlers 12 geschleudert. Durch den sich zwischen dem Kotflügel 5 und dem Reifen 3 ausbildenden Schmutzwasserkeil wird im Zwischenraum zwischen dem Kotflügel 5 und dem Reifen 3 ein Unterdruck erzeugt, der bei geringeren Fahrgeschwindigkeiten zusätzlich Wasser ansaugt, was durch einen Pfeil 15 dargestellt ist.

Bei einem herkömmlichen Motorrad, wie es in Figur 1 dargestellt ist, kann es beim Fahren auf regennasser Fahrbahn zu einer sehr starken Verschmutzung des Kühlers und anderer Motorradkomponenten kommen.

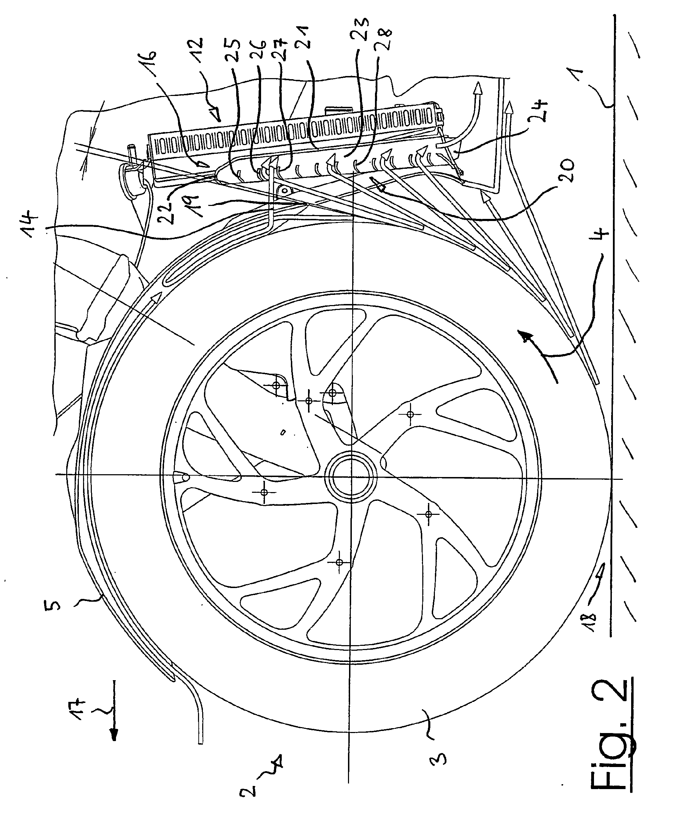

Figur 2 zeigt den Vorderradbereich eines Motorrads, bei dem zusätzlich zu dem Kotflügel 5 ein Spritzwasserauffangelement 16 vorgesehen ist. Das Spritzwasserauffangelement 16 ist in Bezug auf eine Hauptfahrtrichtung 17 des Motorrads hinter dem Reifen 3 angeordnet. In Drehrichtung 4 des Reifens 3 ist das Spritzwasserauffangelement zwischen einem Aufstandsbereich 18 des Reifens 3 und einem unteren Ende 19 des Kotflügels 5 angeordnet. Bei dem Spritzwasserauffangelement 16 handelt es sich um ein kastenartiges Bauteil, das eine dem Reifen 3 zugewandte, zum Reifen 3 hin offene Vorderseite 20, eine dem Reifen abgewandte Rückwand 21, einen mit der Rückwand 21 verbundenen oberen Wandbereich 22 sowie mit der Rückwand 21 und dem oberen Wandbereich 22 verbundene Seitenwände 23 aufweist, die sich nach unten erstrecken. Das Spritzwasserauffangelement 16 weist in einem unteren Bereich eine Wasseraustrittsöffnung 24 auf.

Die "Vorderseite 20" des Spritzwasserauffangelements 16 ist im wesentlichen durch mehrere übereinander angeordnete lamellenartige Elemente 25 - 28 gebildet. Die lamellenartige Elemente 25 - 28 erstrecken sich quer in Bezug auf das Spritzwasserauffangelement 16 und verbinden die beiden Seitenwände miteinander. In der in Figur 2 gezeigten Schnittdarstellung ist zu erkennen, dass die lamellenartigen Elemente 25 - 28 schaufelartig gekrümmt sind. Die dem Reifen 3 zugewandten Endbereiche der lamellen-artigen Elemente 25 - 28, d. h. die "Einlaufabschnitte" der lamellenartigen Elemente 25 - 28 sind im wesentlichen parallel zu den Abspritztangenten des Reifens 3.

Ein Teil des vom Reifen 3 geförderten Schmutz- bzw. Spritzwassers gelangt also entlang der lamellenartigen Elemente 25 - 28 in das "Innere" des Spritzwasserauffangelements 16. Da die lamellenartigen Elemente 25 - 28 schaufelartig zur Rückwand 21 hin gekrümmt sind, wird das aufgefangene Spritzwasser zur Rückwand 21 hin bzw. schräg nach unten zur Austrittsöffnung 24 geleitet. Das aufgefangene Spritzwasser läuft also primär an der Innenseite der Rückwand 21 bzw. an den Seitenwänden 23 des Spritzwasserauffangelements 16 nach unten zur Austrittsöffnung 24, wo es zur Fahrbahn 1 hin abgegeben wird.

Ein Großteil des vom Reifen 3 geförderten Spritzwassers wird somit durch das Spritzwasserauffangelement 16 aufgefangen. Dadurch wird die Verschmutzung des Kühlers 12 bzw. anderer Fahrzeugkomponenten stark reduziert. Das Schmutzwasserauffangelement 16 fängt auch Schmutzwasser auf, das vom Kotflügel 5 durch zurückläuft und durch den Fahrtwind nach hinten geschleudert wird, was durch den Spritzwasserpfeil 14 angedeutet ist.

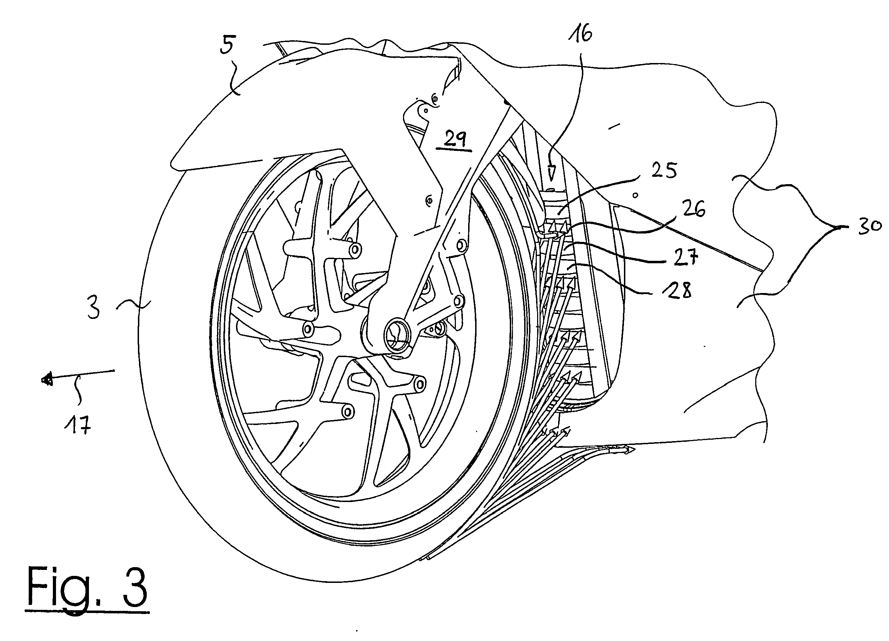

Figur 3 zeigt eine perspektivische Darstellung eines Vorderradbereichs eines Motorrads. Sehr deutlich zu erkennen ist hier, dass ich die Lamellen 25 - 28 des Spritzwasserauffangelements 16 quer zur Längsrichtung des Motorrads bzw. quer zur Hauptfahrtrichtung 17 erstrecken. Im Unterschied zum Kotflügel 5, der fest in Bezug auf eine Vorderradgabel 29 angeordnet ist, ist das Spritzwasserauffangelement 16 fest in Bezug auf den Motorradrahmen bzw. auf eine Verkleidung 30 des Motorrads angeordnet.

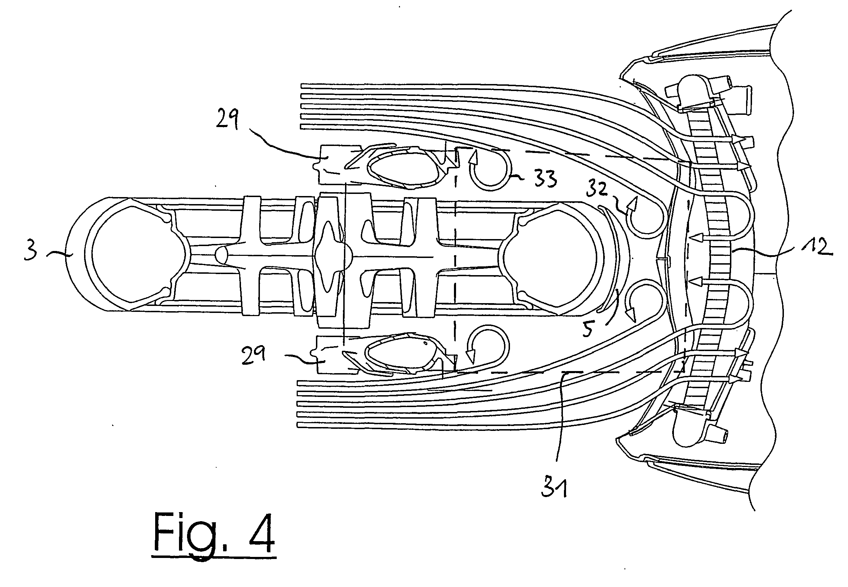

Figur 4 erläutert die Strömungsverhältnisse bei einem herkömmlichen Motorrad, das nicht mit einem Spritzwasserauffangelement ausgestattet ist. Im Bereich hinter der Vorderradgabel 29 und im Bereich hinter des Vorderreifens 3 entsteht eine Unterdruckzone, die durch gestrichelte Linien 31 abgedeutet ist. Im Bereich der Unterdruckzone 31 ist die durch Strömung des Kühlers 12 beeinträchtigt, da sich vor dem Kühler 12 Wirbel 32, 33 bilden.

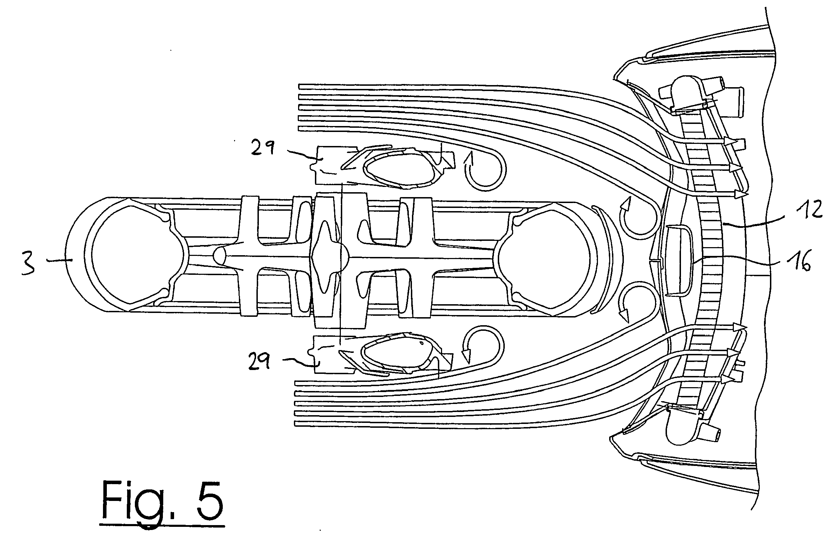

Figur 5 zeigt die Strömungsverhältnisse bei einem mit einem Spritzwasserauffangelement 16 ausgerüsteten Motorrad. Durch das Spritzwasserauffangelement 16 kann eine Verkleinerung der Unterdruckzone erreicht werden, was eine Verbesserung der Durchströmung des Kühlers 12 und somit eine größere Kühlleistung ermöglicht.

## Patentansprüche

1. Motorrad mit einer Spritzwassersammeleinrichtung, mit
• einem Kotflügel (5), der in einem Abstand von einem Reifen (3) des Motorrads angeordnet ist und der sich in Drehrichtung (4) des Reifens (3) über einen Umfangsabschnitt des Reifens (3) erstreckt,
• einem Spritzwasserauffangelement (16),
○ das in einem Bereich angeordnet ist, der sich in Bezug auf eine Hauptfahrrichtung (17) des Motorrads hinter dem Reifen (3) und vorderhalb eines Motors sowie vorderhalb eines Kühlers des Motorrads befindet,
○ das Spritzwasser, welches bei der Drehung des Reifens (3) vom Reifen (3) nach oben gefördert wird und sich dabei vom Reifen (3) ablöst, auffängt, und in Richtung zur Fahrbahn (1) hin ableitet, und
○ das an einer zum Reifen hin offenen Vorderseite (20) lamellenartige Elemente (25 - 28) aufweist, die jeweils einen Einlaufbereich aufweisen, wobei die Einlaufbereiche im wesentlichen parallel zu Abspritztangenten (6 - 9) des Reifens (3) sind,
**dadurch gekennzeichnet, dass**
das Spritzwasserauffangelement (16) eine der Vorderseite (20) oder dem Reifen abgewandte, den Kühler vor Verschmutzung schützende Rückwand (21) aufweist, welche eine Innenseite aufweist, an der aufgefangenes Spritzwasser in Richtung zur Fahrbahn läuft.

2. Motorrad nach Anspruch 1, wobei das Spritzwasserauffangelement einen mit der Rückwand (21) verbundenen, oberen Wandbereich (22) und mit der Rückwand (21) und mit dem oberen Wandbereich (22) verbundene Seitenwände (23) aufweist.

3. Motorrad nach einem der Ansprüche 1 oder 2, wobei das Spritzwasserauffangelement (16) ein kastenartiges Bauteil ist.

4. Motorrad nach einem der vorangehenden Ansprüche, wobei sich die lamellenartigen Elemente (25 - 28) zwischen den beiden Seitenwänden (23) erstrecken.

5. Motorrad nach einem der vorangehenden Ansprüche, wobei die lamellenartigen Elemente (25 - 28) schaufelartig gekrümmt sind, derart, dass aufgefangenes Spritzwasser von dem jeweiligen Einlaufbereich der lamellenartigen Elemente (25 - 82) kommend zur Rückwand (21) hin geleitet wird.

6. Motorrad nach einem der vorangehenden Ansprüche, wobei die lamellenartigen Elemente (25 - 82) schaufelartig gekrümmt sind, derart, dass aufgefangenes Spritzwasser von dem jeweiligen Einlaufbereich kommend in Richtung zur Fahrbahn (1) hin nach unten abgeleitet wird.

7. Motorrad nach einem der Ansprüche 1 bis 7, wobei der Reifen (3) ein Vorderreifen ist.

8. Motorrad nach einem der Ansprüche 1 bis 8, wobei das Spritzwasserauffangelement fest in Bezug auf einen Rahmen des Motorrads angeordnet ist.

## Claims

1. A motorcycle with a splash-water collecting device, comprising
. a mudguard (5) disposed at a distance from a tyre (3) of the motorcycle and extending in the direction of rotation (4) of the tyre (3) and over a portion of the tyre periphery,
. a splash-water collecting element (16),
. disposed in a region which, relative to the main direction of travel (17) of the motorcycle, lies behind the tyre (3), in front of an engine and in front of a motorcycle radiator,
. the splash water conveyed upwards by the tyre (3) during rotation thereof and thrown off the tyre (3) is collected and conveyed towards the road (1), and
. the front (20), open towards the tyre, has plate-like elements (25 - 28) which each have an inflow region, wherein the inflow regions are substantially parallel to the splash tangents (6 - 9) of the tyre (3),
**characterised in that**
the splash-water collecting element (16) has a back wall (21) remote from the front (20) or the tyre and protecting the radiator from dirt, the back wall having an inner side along which collected splash water flows towards the road.

2. A motorcycle according to claim 1, wherein the splash-water collecting element has a top region (22) connected to the back wall (21) and has side walls (23) connected to the back wall (21) and to the top wall region (22).

3. A motorcycle according to claim 1 or claim 2, wherein the splash-water collecting element (16) is a box-shaped component.

4. A motorcycle according to any of the preceding claims, wherein the plate-like elements (25 - 28) extend between the two side walls (23).

5. A motorcycle according to any of the preceding claims, wherein the plate-like elements (25 - 28) are shovel-like, such that collected splash water is conveyed from the inlet regions of each plate-like elements (25 -28) towards the rear wall (21).

6. A motorcycle according to any of the preceding claims, wherein the plate-like elements (25 - 28) are shovel-shaped, such that collected splash water from the inlet regions is discharged downwards towards the road (1).

7. A motorcycle according to any of claims 1 to 7, wherein the tyre (3) is a front tyre.

8. A motorcycle according to any of claims 1 to 8, wherein the splash-water collecting element is fixed relative to a frame of the motorcycle.

## Revendications

1. Moto comportant une installation de collecte de l'eau projetée comportant :
- un garde-boue (5) installé à distance du pneumatique (3) de la moto et s'étendant dans le sens de rotation (4) du pneumatique (3) sur un segment périphérique du pneumatique (3),
- un élément collecteur de l'eau projetée (16),
* installé dans une zone qui se situe par rapport à la direction principale de déplacement (17) de la moto, derrière le pneumatique (3) et devant le moteur ainsi que devant le radiateur de la moto,
* l'eau projetée vers le haut par la rotation du pneumatique (3) et qui se détache du pneumatique (3), est collectée et déviée en direction de la chaussée (1), et
* ayant sur le côté avant (20) ouvert en direction du pneumatique, des éléments (25-28) en forme de lamelles, avec une zone d'entrée,
** les zones d'entrée étant principalement parallèles à la tangente de projection (6-9) du pneumatique (3),
moto **caractérisée en ce que**
l'élément collecteur de l'eau projetée (16) a une paroi arrière (21) non tournée vers le côté avant (20) ou le pneumatique et protégeant le radiateur contre les saletés, cette paroi ayant un côté intérieur sur lequel coule l'eau projetée et recueillie, en direction de la chaussée.

2. Moto selon la revendication 1,
dans laquelle
l'élément collecteur de l'eau projetée a une zone de paroi (22) supérieure reliée à la paroi arrière (21) et des parois latérales (23) reliées à la paroi arrière (21) et à la zone de paroi supérieure (22).

3. Moto selon la revendication 1 ou 2,
**caractérisée en ce que**
l'élément collecteur de l'eau projetée (16) est une pièce en forme de caisson.

4. Moto selon l'une des revendications précédentes,
**caractérisée en ce que**
les éléments en forme de lamelles (25-28) s'étendent entre les deux parois latérales (23).

5. Moto selon l'une des revendications précédentes,
**caractérisée en ce que**
les éléments en forme de lamelles (25-28) sont cintrés en forme d'aubes de façon que l'eau projetée et collectée soit guidée de la zone d'entrée respective des éléments en forme de lamelles (25-28) vers la paroi arrière (21).

6. Moto selon l'une des revendications précédentes,
**caractérisée en ce que**
les éléments en forme de lamelles (25-28) sont cintrés en forme d'aubes de façon que l'eau projetée et collectée arrivant de la zone d'entrée respective, soit dirigée vers le bas de la chaussée (1).

7. Moto selon l'une des revendications 1 à 6,
**caractérisée en ce que**
le pneumatique (3) est le pneumatique avant.

8. Moto selon l'une des revendications 1 à 7,
**caractérisée en ce que**
l'élément de collecte de l'eau projetée est installé de manière fixe par rapport au châssis de la moto.
